# EUROPÄISCHE PATENTSCHRIFT

(11) **EP 2 273 623 B1**
(45) Veröffentlichungstag und Bekanntmachung des Hinweises auf die Patenterteilung: **15.04.2015**
(21) Anmeldenummer: 10006617.4
(22) Anmeldetag: 25.06.2010
(51) Int. Cl.: H01R 12/91, H01R 13/11, H01R 13/18, H01R 13/631, H01R 13/66, B60L 11/14, B60L 15/20, H01R 12/71

(54) **Leistungsteil für einen Motor eines Flurförderzeugs**
Power element for an engine of an industrial truck
Elément de puissance pour le moteur d'un chariot de manutention

(30) Priorität: 08.07.2009 DE 102009032103
(43) Veröffentlichungstag der Anmeldung: 12.01.2011
(73) Patentinhaber: Jungheinrich Aktiengesellschaft, 22047 Hamburg (DE)
(72) Erfinder: Schuldt, Thomas, 22179 Hamburg (DE)
(74) Vertreter: Hauck Patentanwaltspartnerschaft mbB

(56) Entgegenhaltungen:
- EP-A1- 1 434 313
- EP-A1- 1 705 751
- EP-A2- 1 120 861
- WO-A1-00/52788
- DE-A1-102007 003 636
- US-A- 2 086 424
- US-A1- 2004 229 490
- US-B1- 7 018 216
- US-B1- 7 442 045

## Beschreibung

Die Erfindung bezieht sich auf ein Leistungsteil für einen Motor eines Flurförderzeugs nach dem Patentanspruch 1.

Zur Versorgung von mit Wechsel- oder Drehstrom betriebenen Motoren aus einer Batterie für Flurförderzeuge werden sogenannte Leistungsteile verwendet. Sie bestehen aus Leistungshalbleitern, die von einem Steuerteil entsprechend gesteuert werden. Die Leistungshalbleiter sowie auch die Steuerhalbleiter und andere Komponenten werden auf Leiterplatten untergebracht. Es ist bekannt, bei Leistungsteilen die Leiterplatten für den Leistungsteil und den Steuerteil in einem geeigneten Gehäuse unterzubringen und das Gehäuse seinerseits an einem geeigneten Ort am Flurförderzeug zu montieren. Die Kabel werden an das Gehäuse herangeführt, und es ist eine geeignete Durchführung durch die Gehäusewandung vorzusehen, um einen Kontakt mit der entsprechenden Leiterplatte herzustellen. Herkömmlich werden derartige Anschlüsse mechanisch mit Gehäuse und Leiterplatte verbunden durch Aufschrauben und durch Einpressen in die Leiterplatten. Um eine möglichst einfache Durchführung durch das Gehäuse zu ermöglichen, muss das Gehäuse sowie die Leiterplatte mit den Anschlüssen sehr genau gefertigt werden, um eine sichere und wasserdichte Montage zu ermöglichen. Bei der Erstellung der Anschlüsse werden Montage und Betriebskräfte unmittelbar auf die innen liegende Leiterplatte übertragen.

Dokument US-A-7442045 offenbart die Merkmale des Oberbegriffs des Anspruchs 1.

Der Erfindung liegt die Aufgabe zugrunde, ein Leistungsteil für einen Motor eines Flurförderzeugs zu schaffen, bei dem die Stromzuführung zur Leiterplatte hin kraftentkoppelt ist.

Diese Aufgabe wird durch die Merkmale des Patentanspruchs 1 gelöst.

Bei dem erfindungsgemäßen Leistungsteil weisen die Leistungsanschlüsse ein erstes durch die Wand hindurch geführtes Anschlussteil auf mit einem innerhalb des Gehäuses liegenden ersten Kontaktabschnitt. Ein zweites Anschlussteil innerhalb des Gehäuses weist einen zweiten Kontaktabschnitt auf, der mit der Leiterplatte kontaktiert ist, beispielsweise durch Einpressen, Auflöten oder dergleichen. Erster und zweiter Kontaktabschnitt sind zueinander ausgerichtet, haben jedoch einen Abstand voneinander. Eine radial elastisch aufweitbare Hülse aus leitendem Material umgibt beide Kontaktabschnitte klemmend, wobei die Außenkontur der Kontaktabschnitte und die Hülse so geformt sind, dass ein mechanischer Kontakt der Kontaktabschnitte mit der Hülse auch bei einer Fehlausrichtung der Kontaktabschnitte zueinander aufrechterhalten bleibt.

Bei der Erfindung wird ein Winkelversatz zwischen den beiden Kontaktabschnitten ermöglicht sowie auch ein achsparalleler Versatz. Eine präzise Montage der Leiterplatte bzw. die präzise Ausgestaltung der Leiterplatte relativ zur Öffnung im Gehäuse ist daher nicht mehr erforderlich. Äußere Kräfte oder Drehmomente werden von der Gehäusewandung aufgefangen und können keinen schädlichen Einfluss auf den inneren Kontaktabschnitt haben.

Für die Ausgestaltung der einzelnen Teile der Leistungsanschlüsse sind verschiedene konstruktive Möglichkeiten denkbar. Nach einer bevorzugten Ausgestaltung der Erfindung ist die Außenkontur mindestens eines der Kontaktabschnitte tonnenförmig. Die Hülse ist innen zylindrisch oder aufweist einen polygonalen Querschnitt. Nach der Erfindung ist mindestens ein Kontaktabschnitt von einem Doppelkegel gebildet mit gemeinsamer Basisfläche, wobei die Mantelflächen einen gerundeten Übergang aufweisen. Der Kontaktabschnitt hat daher zwei konische Mantelabschnitte, wobei der größte Durchmesser am Übergang zwischen dem Mantelabschnitten liegt. Der Konuswinkel kann relativ klein sein, beispielsweise 5° bis 8°. Zwischen den Mantelabschnitten ist ein gerundeter Übergang vorgesehen. Der Innendurchmesser der Hülse ist etwas kleiner als der maximale Außendurchmesser des Doppelkegels.

Die die Kontaktabschnitte klemmend umgebende Hülse ist in Längsrichtung geschlitzt (geteilt). Sie kann auch ungeteilt mit mehreren Schlitzen geformt werden, die eine radiale Dehnung der Hülse zulassen.

Nach der Erfindung ist die Hülse einteilig geformt.

Nach einer weiteren Ausgestaltung der Erfindung ist die Hülse mittig durch eine Querwand geteilt, und die achsparallelen Schlitze erstrecken sich annähernd bis zur Querwand. Auf diese Weise wird eine Doppelhülse erhalten, wobei jedem Hülsenabschnitt einem Kontaktabschnitt zugeordnet ist. Nach einer weiteren Ausgestaltung der Erfindung hierzu ist die Wandung der Hülse durch äußere Ringnuten auf beiden Seiten der Querwand geschwächt. Dadurch wird eine bessere Nachgiebigkeit der durch die Schlitze gebildeten Wandabschnitte erreicht. Schließlich wird in diesem Zusammenhang vorgeschlagen, dass die Hülse nahe den freien Enden eine äußere ringförmige Aufnahmenut aufweist, die eine Ringfeder aufnimmt. Die vorzugsweise aus flachem Material geformte Ringfeder erhöht den klemmenden Eingriff zwischen Hülse und Kontaktabschnitt.

Nach der Erfindung weist das erste Anschlussteil einen Anschlussabschnitt auf, der in der Gehäusewandung festgelegt ist. Dieser kann z.B. zylindrisch geformt und einteilig mit dem ersten Kontaktabschnitt sein. Alternativ kann der Abschlussabschnitt einen Sechskant aufweisen, der in der Gehäusewandung festgelegt ist.

Ist die Gehäusewandung aus Kunststoff geformt, braucht keine besondere Isolierung für den Anschlussabschnitt vorgesehen werden. In diesem Fall ist nach der Erfindung auch zweckmäßig, wenn die Gehäusewandung an den Anschlussteil angespritzt ist.

Zwecks Kontaktierung mit der Leiterplatte sieht die Erfindung vor, dass der zweite Kontaktabschnitt mit einem scheibenförmigen Abschnitt verbunden ist zwecks Kontaktnahme mit der Leiterplatte. Der scheibenförmige Abschnitt ist einteilig mit dem zweiten Kontaktabschnitt geformt.

Nach einer weiteren Ausgestaltung der Erfindung ist die Hülse zwecks Verbindung der Kontaktabschnitte mit einem Innendurchmesser versehen, der kleiner ist als der Außendurchmesser der kugel- oder fassförmigen Kontaktabschnitte. Die Hülse ist ferner von ihren Enden ausgehend mit achsparallelen Schlitzen versehen, die in Umfangsrichtung gleichmäßig beabstandet sind. Die Schlitze können entweder zueinander versetzt liegen oder auch zueinander ausgerichtet. Im ersteren Fall ist ihre Länge nach einer weiteren Ausgestaltung der Erfindung etwa 2/3 der Gesamtlänge der Hülse. Bei einer Ausrichtung der Schlitze zueinander beträgt deren Länge nach einer weiteren Ausgestaltung der Erfindung etwa 3/8 der Länge der Hülsen. Insbesondere bei der Ausrichtung der den Enden der Hülse zugeordneten Schlitzen zueinander ist es von Vorteil, wenn die Dicke der Wandung der Hülse im mittleren Bereich größer ist als zu den Enden. Dadurch werden die Kontaktenden dünner und ermöglichen eine hohe Biegsamkeit der auf diese Weise gebildeten Kontaktfedern. Insgesamt wird bei der Formgebung mit den Schlitzen eine Hülse erhalten, welche im Durchmesser veränderlich ist, ohne dass sie plastisch verformt ist. Durch die Länge der Schlitze lässt sich die Kontakt- und Steckkraft einstellen. Die Hülse ist vorzugsweise kreiszylindrisch, kann jedoch auch im Querschnitt polygonal sein.

Ein Ausführungsbeispiel der Erfindung wird nachfolgend anhand einer Zeichnung näher erläutert.
- Fig.1: zeigt perspektivisch ein Leistungsteil für ein batteriebetriebenes Flurförderzeug mit Leistungsanschlüssen nach der Erfindung.
- Fig. 2: zeigt einen Schnitt durch das Leistungsteil nach Fig. 1 im Bereich eines der Leitungsanschlüsse in schematischer Darstellung.
- Fig. 3: zeigt einen ähnlichen Anschluss wie Fig. 2.
- Fig. 4: zeigt perspektivisch eine Hülse wie sie etwa für die Ausgestaltung nach Fig. 3 verwendet werden kann.
- Fig. 5: zeigt perspektivisch eine weitere Möglichkeit einer Hülse, wie sie in Verbindung mit der Ausführungsform nach Fig. 3 verwendet werden kann.
- Fig. 6: zeigt eine andere Ausführungsform eines Leistungsanschlusses für ein Leistungsteil.
- Fig. 7: zeigt einen Schnitt durch die Darstellung nach Fig. 6 entlang der Linie 7-7.
- Fig.8: zeigt in Seitenansicht die beiden Anschlussteile für den Leistungsanschluss nach den Fign. 6 und 7.

- Fig. 9: zeigt in Seitenansicht die Hülse des Leistungsanschlusses nach Fig. 6.
- Fig. 10: zeigt einen Schnitt durch die Darstellung nach Fig. 9 entlang der Linie 10-10.
- Fig. 11: zeigt die Draufsicht auf die Hülse nach Fig. 9 entlang Pfeil 11.
- Fig. 12: zeigt eine weitere Ausführungsform eines Leistungsanschlusses nach der Erfindung in Seitenansicht.
- Fig. 13: zeigt einen Schnitt durch die Darstellung nach Fig. 12 entlang der Linie 13-13.
- Fig. 14: zeigt in Seitenansicht die Hülse des Leistungsanschlusses nach Fig. 12.
- Fig. 15: zeigt einen Schnitt durch die Darstellung nach Fig. 14 entlang der Linie 15-15.
- Fig. 16: zeigt eine Draufsicht auf die Darstellung nach Fig. 15 in Richtung Pfeil 16.

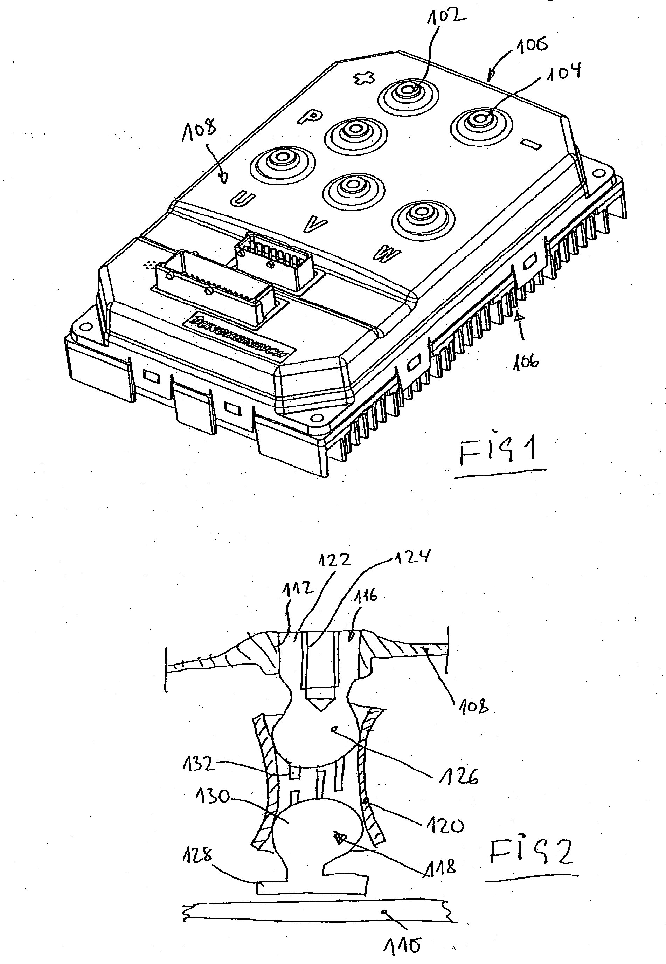

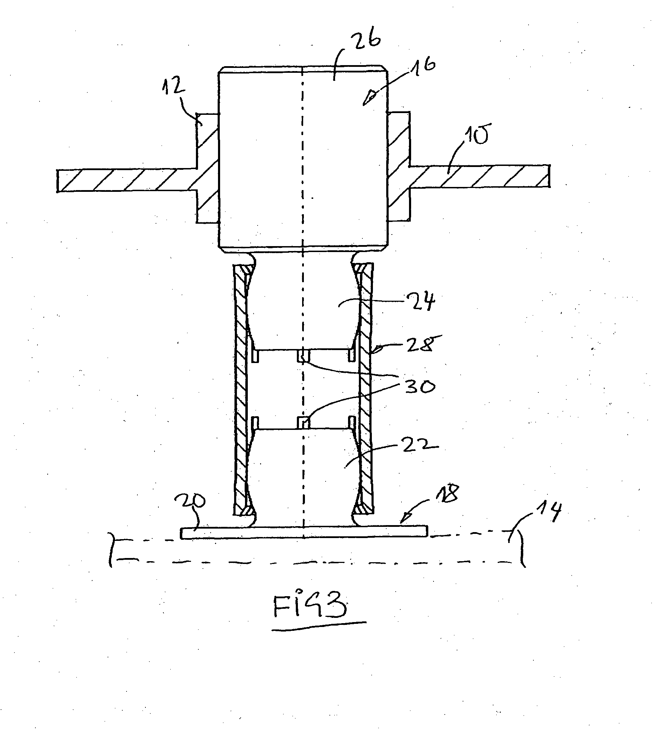

In Fig. 1 ist ein Leistungsteil 100 perspektivisch dargestellt, wie es z. B. für ein batteriebetriebenes Flurförderzeug verwendet wird, beispielsweise für die Versorgung eines Fahrantriebs oder anderer elektrischer Antriebe. Das Flurförderzeug ist hier nicht dargestellt. Es kann beliebig ausgeführt sein. Das Leistungsteil 100 wandelt Gleichstrom in Drehstrom um. Für die Verbindung des Leistungsteils 100 mit einer nicht gezeigten Batterie dienen die Leistungsanschlüsse 102 und 104. Die Drehstromanschlüsse sind mit U, V und W bezeichnet. Der neutrale Ausgang ist mit P bezeichnet. Alle Leistungsanschlüsse sind von ähnlichem oder gleichem Aufbau, wie er anhand der Figuren 2 oder 3 dargestellt werden soll. Mit den Leistungsanschlüssen sind Kabel verbunden, wobei die Kabel zu den Leistungsanschlüssen 102 und 104 zur Batterie geführt sind und die von den Leistungsanschlüssen U, V, W und P kommenden Kabel zu den Stromverbrauchern geführt sind. Auch die Kabel sind hier nicht dargestellt.

In Fig. 1 ist ein Kühlkörper 106 zu erkennen, auf dem ein Gehäusedeckel 108 aufgesetzt ist. Die Leistungsanschlüsse sind im Gehäusedeckel 108 angebracht. Auf dem Kühlkörper und innerhalb des Gehäusedeckels 108 befindet sich eine Leiterplatte, mit der die Leistungsanschlüsse verbunden sind. Auf den Leiterplatten sind alle notwendigen Schaltungsbauteile und Komponenten angebracht, die für die Versorgung der Stromverbraucher aus der Batterie des Flurförderzeugs erforderlich sind. Derartige Leiterplatten sind ebenfalls allgemein bekannt und sollen nicht weiter beschrieben werden.

In Fig. 2 ist eine Leiterplatte 110 angedeutet, und man erkennt außerdem im Schnitt einen Teil des Gehäusedeckels 108. In einer Öffnung 112 des Gehäusedeckels 108 ist ein erstes Anschlussteil 116 angebracht, beispielsweise durch Verklebung, durch Einpressung oder auf sonstige Weise. Das Anschlussteil 116 muss elektrisch mit dem zweiten Anschlussteil 118 verbunden werden, damit eine elektrische Kontaktierung mit der Leiterplatte 110 erfolgen kann. Dies geschieht mit Hilfe einer Hülse 120, auf die weiter unten noch eingegangen wird.

Das Anschlussteil 116 weist einen zylindrischen Anschlussabschnitt 122 auf, in dem eine axiale Gewindebohrung 124 geformt ist. Mithin kann mit Hilfe einer Schraube ein Kabel mit dem Anschlussabschnitt 122 verbunden werden, was hier jedoch nicht gezeigt ist. Das Anschlussteil 116 weist außerdem einen kugelförmigen Abschnitt 126 auf. Das Anschlussteil 118 weist einen scheibenförmigen Abschnitt 128 auf, der mit der Leiterplatte 110 kontaktiert ist. Außerdem weist er einen kugelförmigen Abschnitt 130 auf. Die Kugelabschnitte 126, 130 haben einen Abstand voneinander. Sie befinden sich beide innerhalb der Hülse 120, die im mittleren Bereich etwas eingeschnürt ist. Die kugelförmigen Abschnitte 126, 130 sind um einen gewissen Betrag in die Hülse 120 eingepresst, so dass eine elektrische Kontaktierung erfolgen kann. Es sei noch erwähnt, dass naturgemäß die Anschlussteile 116, 118 und die Hülse 120 aus einem geeigneten elektrisch leitenden Material, insbesondere Metall oder Metalllegierung bestehen.

Damit die Hülse 120 zur Verklemmung der kugelförmigen Abschnitte 126, 130 ausreichend elastisch ist, ist sie mit achsparallelen Schlitzen 132 geformt.

In der Darstellung nach Fig. 2 sind die Anschlussteile 116, 118 axial zueinander ausgerichtet. Selbst wenn jedoch dies nicht der Fall ist, beispielsweise das Anschlussteil 116 gegenüber dem unteren versetzt ist oder im Winkel einen Versatz aufweist, wird dies ohne weiteres von den kugelförmigen Abschnitten 126, 130 und der Hülse 120 aufgefangen. Damit ist auch bei größeren Toleranzen eine einwandfreie Übertragung von elektrischer Energie gewährleistet.

In Figur 3 ist 10 ein Teil einer Wandung eines nicht weiter gezeigten Gehäuses, z. B. des Leistungsteils nach Fig. 1 für einen Motor eines Flurförderzeugs (alles nicht gezeigt) zu sehen. Die Wandung 10 weist einen Rohrstutzenabschnitt 12 auf, der einteilig mit der Wandung 10 ausgebildet ist, beispielsweise aus Kunststoff. Der Stutzenabschnitt 12 kann jedoch auch aus leitendem Isoliermaterial bestehen, das in einer geeigneten Öffnung in der Wandung 10 angebracht ist. Innerhalb des Gehäuses befindet sich eine Leiterplatte 14 (strichpunktiert angedeutet). Die Leiterplatte enthält alle Komponenten, die für eine Leistungsversorgung eines Motors auf Halbleiterbasis erforderlich sind. Es wird darauf verzichtet, die einzelnen Komponenten hier zu benennen, da sie allgemein bekannt sind.

In der Figur 3 ist ferner ein erstes Anschlussteil 16 zu erkennen, sowie ein zweites Anschlussteil 18. Das zweite Anschlussteil 18 weist einen scheibenförmigen Abschnitt 20 auf, der in geeigneter Weise mit der Leiterplatte 14 mechanisch und elektrisch verbunden ist. Beispielsweise ist der scheibenförmige Abschnitt 20 auf der Leiterplatte 14 gelötet.

Der scheibenförmige Abschnitt 20 ist einteilig mit einem Kontaktabschnitt 22 geformt, der eine tonnenförmige Außenkontur hat.

Das erste Anschlussteil 16 weist einen Kontaktabschnitt 24 auf, der zum Kontaktabschnitt 22 ausgerichtet ist und ebenfalls eine tonnenförmige Außenkontur hat. Die Kontaktabschnitte 22, 24 haben einen Abstand voneinander.

Der Kontaktabschnitt 24 ist einteilig mit einem zylindrischen Anschlussabschnitt 26 verbunden, der sich durch den Stutzenabschnitt nach außen erstreckt. Er weist Mittel auf zur Verbindung mit einem Kabel, beispielsweise einem Kabelschuh der mit Hilfe einer Schraube am Anschlussabschnitt 26 befestigt wird, wobei dieser axial eine Gewindebohrung aufweisen kann zur Anklemmung des Kabelschuhs (nicht angezeigt).

Eine zylindrische Hülse 28 aus elektrisch leitendem Material, beispielsweise aus einem geeigneten Metall, umgibt beide Kontaktabschnitte 22, 24 klemmend. Um die Hülse 28 klemmend aufzubringen, ist sie z.B. mit einem durchgehenden Längsschlitz versehen. Alternativ kann sie auch als geschlossene Hülse mit einer Mehrzahl von achsparallelen Schlitzen versehen werden, um eine gewisse radiale Elastizität vorzusehen. In der Figur sind z.B. bei 30 Schlitze angedeutet, die axial zueinander ausgerichtet sind. Ihre Länge beträgt z.B. 3/8 der Gesamtlänge der Hülse 28.

Die Hülse kann im Querschnitt auch polygonal sein und außerdem an der Innenseite Einwölbungen aufweisen, die sich mehr oder weniger an die tonnenförmige Außen kontur der Kontaktabschnitte 22, 24 anschmiegen.

Wie man erkennt, ist durch die gezeigte Ausbildung des Leistungsanschlusses eine Fehlausrichtung der Kontaktabschnitte 22, 24 sowohl in axialer als auch in winkliger Richtung möglich, ohne dass dadurch die Stromübertragung beeinträchtigt ist. Es ist daher nicht erforderlich, die Kontaktabschnitte 22, 24 exakt zueinander auszurichten. Eine nicht genaue Anbringung des Kontaktabschnitts 22 an der Leiterplatte 14 relativ zur Öffnung im Gehäuse ist daher unkritisch. Man erkennt ferner, dass Kräfte, die bei der Montage auftreten, beispielsweise bei der Anbringung eines Kabels, und die auf das obere Anschlussteil wirken, nicht auf das untere Anschlussteil übertragen werden.

In den Figuren 2 und 3 ist lediglich ein Leistungsanschluss dargestellt. Es versteht sich, dass die Anschlüsse nach Fig. 1 entsprechend vorgesehen sein können.

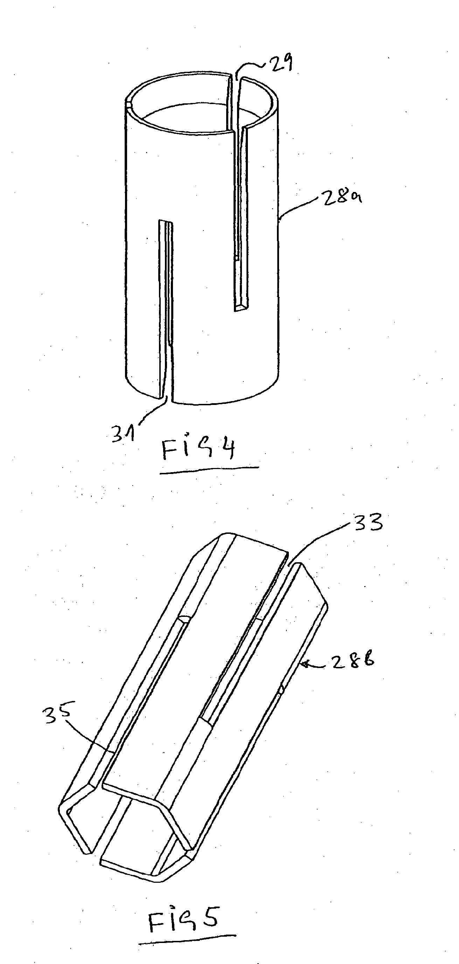

In Fig. 4 ist eine Hülse 28a dargestellt, die kreiszylindrisch ist und von den Enden ausgehend jeweils drei in Umfangsrichtung gleichmäßig beabstandete achsparallele Schlitze 29 bzw. 31 aufweist. Die Schlitze 29, 31 sind versetzt zueinander angeordnet. Ihre Länge beträgt zum Beispiel 2/3 der Gesamtlänge der Hülse 28a. Die Hülse kann zum Beispiel für Kontaktabschnitte verwendet werden, wie sie in Fig. 2 oder auch in Fig. 3 dargestellt sind. Sie sind dort kugel- bzw. fassförmig. Der Innendurchmesser der Hülse 28a ist etwas geringer als der Außendurchmesser der Kontaktabschnitte 126, 130 bzw. 22 bzw. 24.

In Fig. 5 ist eine Hülse 28b dargestellt, die im Querschnitt sechseckig ist. Sie ist in den Eckbereichen mit Schlitzen 33 bzw. 35 versehen, die jeweils von den Enden achsparallel in der Wandung der Hülse 28b erstreckt sind, wobei die Schlitze 33, 35 in Umfangsrichtung zueinander versetzt liegen. Ihre Länge beträgt ebenfalls zum Beispiel 2/3 der Gesamtlänge der Hülse 28b.

Es ist auch denkbar, bei den Hülsen 28a, 28b achsparallele Schlitze zu formen, die direkt einander gegenüberliegen bzw. zueinander ausgerichtet sind. In diesem Falle muss ihre Länge naturgemäß kleiner sein als die halbe Länge der Hülse. Sie beträgt daher vorzugsweise 3/8 der Gesamtlänge der Hülse. Bei der zuletzt beschriebenen Ausführungsform ist vorzugsweise die Dicke der Wandung der Hülse im mittleren Bereich größer als zu den Enden.

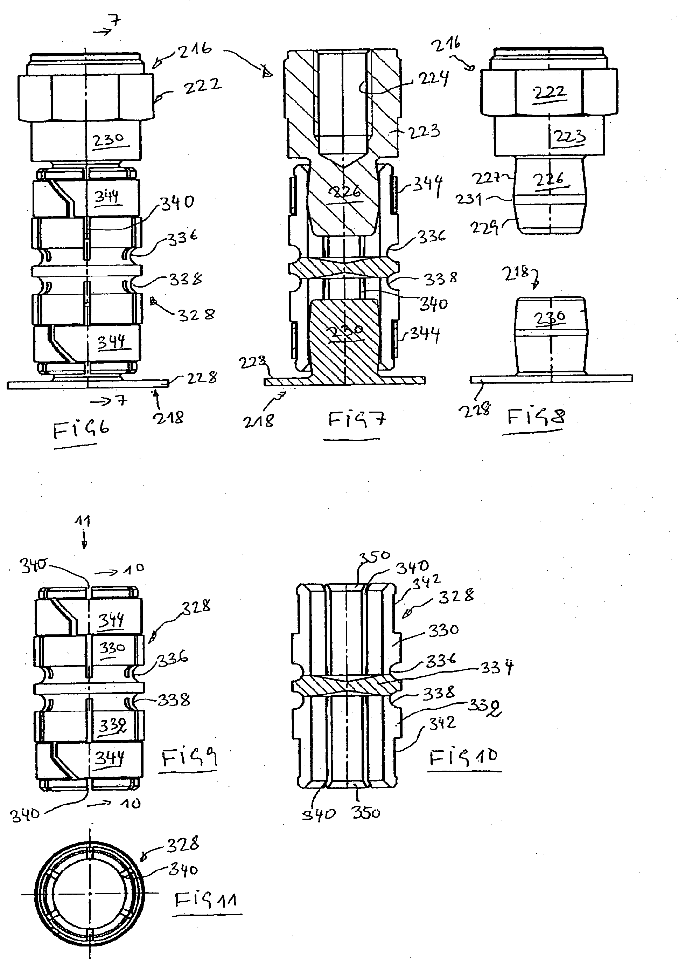

Das in den Fign. 6, 7 und 8 gezeigte Anschlussteil ersetzt z.B. das Anschlussteil 16 oder 116 nach den Fign. 2 und 3. Es ist mit 216 bezeichnet. Ein Anschlussabschnitt 222 weist einen Sechskant auf, der wie der zylindrische Abschnitt 26 in Fig. 3 etwa von der Gehäusewandung umspritzt werden kann. Daran schließt sich ein zylindrischer Abschnitt 223 an. Ein Kontaktabschnitt 226 ist als Doppelkonus ausgebildet, wobei die gemeinsame Basisfläche den Bereich des größten Außendurchmessers des Doppelkonus bildet. Zwischen den konischen Mantelflächen 227 und 229 ist ein gerundeter Übergang gebildet, wie bei 231 angedeutet. Der Konuswinkel ist relativ klein und beträgt z.B. 5° bis 10°. Der Außendurchmesser des Doppelkonus 226 im Bereich des Übergangs 231 ist etwas größer als der Innendurchmesser einer Hülse, wie sie vorstehend beschrieben wird oder noch nachstehend zu erläutern sein wird.

Ähnlich wie in Fig. 2 weist das Anschlussteil 216 eine Gewindebohrung 224 auf, etwa zur Verbindung mit einem Kabelschuh mit Hilfe einer nicht gezeigten Schraube.

In Fig. 8 ist auch das zur Ausführungsform nach den Fign. 6 und 7 zugehörige Anschlussteil 218 dargestellt. Es weist einen flanschartigen Anschlussabschnitt 228 auf sowie einen Kontaktabschnitt 230 in Form eines Doppelkonus, entsprechend dem Doppelkonus des Kontaktabschnitts 226 nach den Fign. 7 und 8.

In den Fign. 6 und 9 bis 11 ist eine Hülse dargestellt, wie sie insbesondere in Verbindung mit der Ausführungsform nach den Fign. 6 und 7 vorteilhaft einsetzbar ist. Die Hülse ist allgemein mit 328 bezeichnet. Sie wird von zwei Hülsenabschnitten 330 und 332 gebildet (Fig. 10), welche durch eine Querwand 334 voneinander getrennt sind. Die Querwand hat auf gegenüberliegenden Seiten eine konische Einsenkung. Zu jedem Hülsenabschnitt 330, 332 gehört eine äußere ringförmige im Querschnitt halbkreisförmige Auskehlung 336, 338, durch welche die Wandung der Hülseabschnitte 330, 332 geschwächt ist. Diese Wandung weist eine Reihe von in Umfangsrichtung beabstandeten achsparallelen Schlitzen 340 auf, die sich bis zur Querwand 334 erstrecken. Die Hülsenabschnitte haben ferner nahe den freien Enden ringförmige Aufnahmenuten 342 für die Aufnahme einer geschlitzten Ringfeder 344 aus Flachmaterial. Die Ringfedern 344 verstärken den klemmenden Eingriff, z.B. mit dem Doppelkegeln der Anschlussabschnitte 226, 230 der Anschlussteile nach Fig. 8.

Fig. 10 zeigt die Hülse 328 ohne die Federn 344. Es versteht sich, dass auch die Hülse 328 aus einem geeigneten, elektrisch leitenden Material besteht und eine ausreichende Elastizität aufweist für den klemmenden Eingriff mit den Doppelkonen der Anschlussteile 216 und 218 nach den Fig. 8. Zum besseren Aufschieben der Hülse 328 auf die Anschlussteile weisen die Hülsenabschnitte 330 und 332 konische Eingangsabschnitte 350 auf.

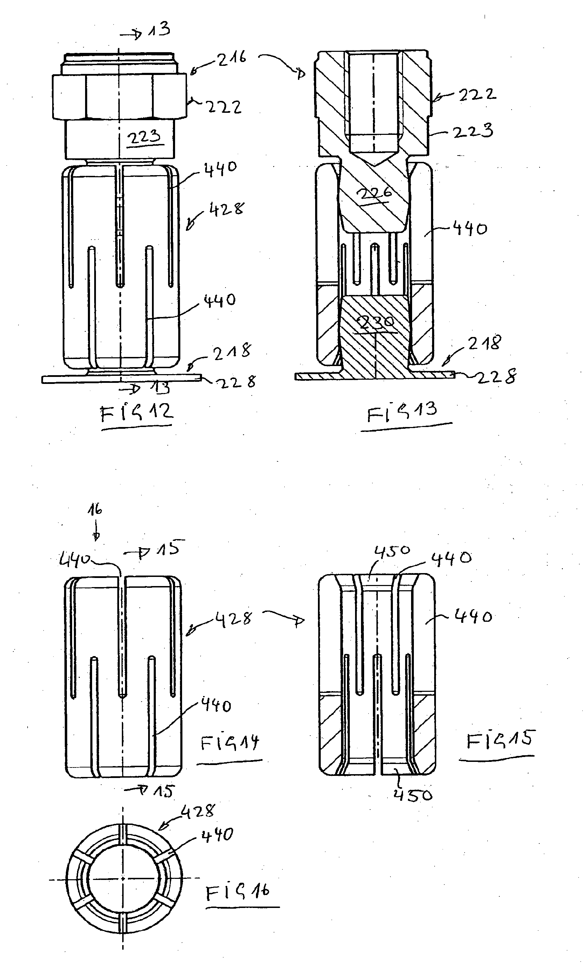

Der Leistungsanschluss nach den Fign. 12 und 13 weist die gleichen Anschlussteile auf wie der Leistungsanschluss nach den Fign. 6 und 7. Es ist jedoch eine abgewandelte Hülse 428 vorgesehen, die im Wesentlichen innen und außen zylindrisch ausgebildet ist. Achsparallele Schlitze 440, die in gleichem Umfangsabstand angeordnet sind, erstrecken sich von beiden Enden der Hülse 428 bis über die Mitte der Hülse hinaus. Außerdem sind die achsparallelen Schlitze 440 zueinander versetzt, so dass sie einander im mittleren Bereich der Hülse 428 einander überlappen. Auch hier besteht die Hülse aus elektrisch gut leitendem Material. Die Funktion der Hülse 428 ist im Übrigen die gleiche wie die Hülse 328 nach den Fign. 6 bis 11. Auch der Zusammenbau mit den Anschlussteilen ist wie bei der Ausführungsform nach den Fign. 6 und 7. Wie erkennbar, ist die Dicke der Wandung der Hülse 428 etwas größer als die der Wandung der Hülse 328 nach den Fign. 6 und 7 bzw. 9 und 10. Die achsparallelen Schlitze 440 sorgen jedoch für eine ausreichende Elastizität. Eine Ringfeder, wie sie bei der Ausführungsform nach den Fign. 6 und 7 eingesetzt wird, kann bei dieser Ausführungsform entfallen.

Es sei noch angemerkt, dass die Länge der achsparallelen Schlitze 440 etwa 2/3 der Gesamtlänge der Hülse 428 beträgt. Bei der Ausführungsform nach den Fign. 6, 7, 9 und 10 beträgt die Länge der Schlitze 328 etwa 3/8 der Gesamtlänge der Hülse 328.

## Patentansprüche

1. Leistungsteil für einen Motor eines Flurförderzeugs, mit einem Gehäuse, mindestens einer Leiterplatte im Gehäuse, die Leistungs- und Steuerkomponenten für den Motor aufweist, und Leistungsanschlüsse für die Stromzuführung, die durch eine Wand des Gehäuses hindurchgeführt und mit der Leiterplatte kontaktiert sind, wobei die Leistungsanschlüsse ein erstes durch die Wand (10, 108) hindurchgeführtes Anschlussteil (16, 116) aufweisen mit einem innerhalb des Gehäuses liegenden ersten Kontaktabschnitt (24, 126), ein zweites Anschlussteil (118) in Kontakt mit der Leiterplatte (14, 110) und mit einem zweiten Kontaktabschnitt (22, 130), der zum ersten Kontaktabschnitt (24, 126) ausgerichtet ist und einen Abstand von diesem hat, und eine radial elastisch einteilige Hülse (28, 120) aus leitendem Material, die beide Kontaktabschnitte (22, 130, 24, 126) klemmend umgibt, wobei die Außenkontur der Kontaktabschnitte (22, 130, 24, 126) und die Hülse (28, 120) so geformt sind, dass ein mechanischer Kontakt der Kontaktabschnitte (22, 130, 24, 126) mit der Hülse (28, 120) auch bei einer Fehlausrichtung der Kontaktabschnitte (22, 24) zueinander aufrecht erhalten bleiben, wobei mindestens ein Kontaktabschnitt von einem Doppelkegel (226, 230) mit gemeinsamer Basisfläche gebildet ist, wobei die Mantelflächen einen gerundeten Übergang (231) aufweisen, die Hülse innen einen zylindrischen oder polygonalen Querschnitt aufweist und die Hülse (28) in Längsrichtung geschlitzt ist und mehrere achsparallel Schlitze (30) aufweist, die eine radiale Dehnung der Hülse (28) zulassen, **dadurch gekennzeichnet, dass** das erste Anschlussteil (16) einen Anschlussabschnitt (26) aufweist, der in der Gehäusewandung (10) festgelegt ist und über diese nach außen steht, dass erster Kontaktabschnitt (24) und Anschlussabschnitt (26) einteilig geformt sind und dass der zweite Kontaktabschnitt (22) mit einem scheibenförmigen Abschnitt (20) verbunden ist zwecks Kontaktnahme mit der Leiterplatte (14) und dass der zweite Kontaktabschnitt (22) einteilig mit dem scheibenförmigen Abschnitt (20) gebildet ist, wobei die Gehäusewandung (10) aus Kunststoff geformt und an das erste Anschlussteil oder den Sechskantabschnitt angespritzt ist.

2. Leistungsteil nach Anspruch 1, **dadurch gekennzeichnet, dass** die Hülse (328) zwischen den Enden durch eine Querwand (334) getrennt ist und die achsparallelen Schlitze (340) sich bis annähernd zur Querwand (334) erstrecken.

3. Leistungsteil nach Anspruch 1, **dadurch gekennzeichnet, dass** die Wandung der Hülse (328) durch äußere Ringnuten (336, 338) auf beiden Seiten der Querwand (34) geschwächt ist.

4. Leistungsteil nach einem der Ansprüche 1 bis 3, **dadurch gekennzeichnet, dass** die ringförmige Hülse (328) nahe den freien Enden eine äußere ringförmige Aufnahmenut (342) aufweist, die eine Ringfeder (344) aufnimmt.

5. Leistungsteil nach Anspruch 1, **dadurch gekennzeichnet, dass** der Anschlussabschnitt (26) zylindrisch geformt ist.

6. Leistungsteil nach Anspruch 1, **dadurch gekennzeichnet, dass** der Anschlussabschnitt einen polygonalen, vorzugsweise sechseckigen Abschnitt (222) aufweist.

7. Leistungsteil nach Anspruch 1, **dadurch gekennzeichnet, dass** die Hülse (28a, 28b) einen kleineren Innendurchmesser hat als der maximale Außendurchmesser des Kontaktabschnitts (22, 24, 126, 130) und die Hülse (28a, 28b) von ihren Enden ausgehend mehrere achsparallele Schlitze (29, 39, 31) bzw. (33, 35) aufweist, die in Umfangsrichtung gleichmäßig beabstandet sind.

8. Leistungsteil nach Anspruch 7, **dadurch gekennzeichnet, dass** die dem einen Ende der Hülse zugeordneten Schlitze gegenüber den gegenüberliegenden Schlitzen in Umfangsrichtung versetzt sind (Fig. 5).

9. Leistungsteil nach Anspruch 7 oder 8, **dadurch gekennzeichnet, dass** die Länge der Schlitze (29, 31) bzw. (33, 35) etwa 2/3 der Gesamtlänge der Hülse (28a, 28b) beträgt.

10. Leistungsteil nach Anspruch 9, **dadurch gekennzeichnet, dass** die den Enden der Hülse zugeordneten Schlitze zueinander ausgerichtet sind.

11. Leistungsteil nach Anspruch 9, **dadurch gekennzeichnet, dass** die Länge der Schlitze (30) etwa 3/8 der Gesamtlänge der Hülse (28) beträgt.

## Claims

1. A power element for a motor of an industrial truck having a housing, in the housing at least one circuit board which has power and control components for the motor and power terminals for a power supply line, which are led through a wall of the housing and connected to the circuit board, wherein the power terminals have a first connection part (16, 116) led through the wall (10, 108) with a first contact section (24, 126) lying within the housing, a second contact part (118) in contact with the circuit board (14, 110), and with a second contact section (22, 130) which is aligned to the first contact section (24, 126) and is distanced from it, and a radially elastic sleeve (28, 120) composed of conducting material, that surrounds the two contact sections (22, 130, 24, 126) in a clamping manner, wherein the outer contour of the contact sections (22, 130, 24, 126) and the sleeve (28, 120) are formed such that a mechanical contact of the contact sections (22, 130, 24, 126) to the sleeve (28, 120) is maintained even with a misalignment of the contact sections (22, 24) to each other, at least one contact section is formed by a double cone (226, 230) with a common base plane, wherein the casing surfaces have a rounded transition (231), wherein further the sleeve has one or more axially parallel slits (30) which permit a radial expansion of the sleeve (28), **characterized in that** the first connection part (16) has a connection section (26) which is fixed in the wall of housing (10) and extends beyond this outwards, the first contact section (24) and the connection section (26) are formed as one piece and the second connection section (22) is connected to a disc shaped section (20) in contact with the circuit board (14) and the second contact section (22) being formed in one piece with the disc shaped section (20), with the wall of the housing (10) being formed from plastic, and the first connection part or the hexagonal section being injection molded.

2. The power element according to claim 1, wherein the sleeve (328) between the ends is separated by a cross wall (334), and the axially parallel slits (340) extend approximately up to the cross wall (334).

3. The power element according to claim 1, wherein the wall of the sleeve (328) is weakened by annular grooves (336, 338) on both sides of the cross wall (34).

4. The power element according to one of the claims 1 to 3, wherein the annular sleeve (328) near the free ends has an outer annular shaped receiving groove (342) that receives an annular spring (344).

5. The power element according to claim 1, wherein the connection section (26) is cylindrically shaped.

6. The power element according to claim 1, wherein the connection section has a polygonal, preferably hexagonal section (222).

7. The power element according to claim 1, wherein the sleeve (28a, 28b) has a smaller inner diameter than the maximum outer diameter of the conical shaped, barrel shaped, or double cone contact section (22, 24, 126, 130) and the sleeve (28a, 28b), starting from its ends, has axially parallel slits (29, 39, 31) or (33, 35) that are uniformly distanced in the circumferential direction.

8. The power element according to claim 7, wherein the slits assigned to the one of the ends of the sleeve are offset in the circumferential direction relative to the opposite lying slits (Fig. 5).

9. The power element according to claim 7 or 8, wherein the length of the slits (29, 31) or (33, 35) amounts to approximately 2/3 of the entire length of the sleeve (28a, 28b).

10. The power element according to claim 9, wherein the slits (30) assigned to the ends of the sleeve (28) are aligned to each other.

11. The power element according to claim 9, wherein the length of the slits (30) amounts to approximately 3/8 of the entire length of the sleeve (28).

## Revendications

1. Élément de puissance pour le moteur d'un chariot de manutention, avec un boitier, au moins un circuit imprimé dans le boitier, qui comporte des composants de puissance et de commande pour le moteur, et des bornes de puissance pour l'alimentation en courant, qui sont guidées à travers une paroi du boitier et contactées avec le circuit imprimé, les bornes de puissance ayant une première pièce de raccordement (16, 116) guidée à travers la paroi (10, 108), avec une première portion de contact (24, 126) située en l'espace du boitier, une deuxième pièce de raccordement (118) en contact avec le circuit imprimé (14, 110) et une deuxième portion de contact (22, 130) qui est alignée sur la première portion de contact (24, 126) et a une distance de celle-ci, et une douille (28, 120) monobloc radialement élastique de matériau conductible qui entoure les deux portions de contact (22, 130, 24, 126) de manière serrante, le contour extérieur des portions de contact (22, 130, 24, 126) et de la douille (28, 120) étant formé tellement qu'un contact mécanique des portions de contact (22, 130, 24, 126) avec la douille (28, 120) est maintenu même quand les portions de contact (22, 24) sont désalignées l'une par rapport à l'autre, au moins une portion de contact étant formée par un double cône (226, 230) avec surface de base commune, les surfaces extérieures comportant une transition (231) arrondie, la douille ayant une section transversale cylindrique ou polygonale dans son intérieur et la douille (28) étant fendue dans la direction longitudinale et comportant plusieurs fentes parallèles à l'axe (30) qui permettent une rotation radiale de la douille (28), **caractérisé en ce que** la première pièce de raccord (16) comporte une portion de raccordement (26) qui est fixée dans la paroi de boitier (10) et projette au-delà de celle-ci vers l'extérieur, que la première portion de contact (24) et la portion de raccordement (26) sont formées en une seule pièce et que la deuxième portion de contact (22) est reliée avec une portion en forme de disque (20) pour prendre contact avec le circuit imprimé (14) et que la deuxième portion de contact (22) est formée en une seule pièce avec la portion (20) en forme de disque, la paroi de boitier (10) étant formée en matière plastique et moulée par injection à la première pièce de raccordement ou la portion hexagonale.

2. Élément de puissance selon la revendication 1, **caractérisé en ce que** la douille (328) est séparée entre les extrémités par une paroi transversale (334), et les fentes parallèles à l'axe (340) s'étendent approximativement jusqu'à la paroi transversale (334).

3. Élément de puissance selon la revendication 1, **caractérisé en ce que** la paroi de la douille (328) est affaiblie par des rainures annulaires extérieures (336, 338) sur les deux côtés de la paroi transversale (34).

4. Élément de puissance selon l'une quelconque des revendications 1 à 3, **caractérisé en ce que** la douille annulaire (328) comporte une rainure de logement extérieure annulaire (342) près des extrémités libres, qui loge un ressort annulaire (344).

5. Élément de puissance selon la revendication 1, **caractérisé en ce que** la portion de raccordement (26) est de forme cylindrique.

6. Élément de puissance selon la revendication 1, **caractérisé en ce que** la portion de raccordement comporte une portion (222) polygonale, de préférence hexagonale.

7. Élément de puissance selon la revendication 1, **caractérisé en ce que** la douille (28a, 28b) a une diamètre intérieur plus petit que le diamètre extérieur maximal de la portion de contact (22, 24, 126, 130), et la douille (28a, 28b) comporte plusieurs fentes parallèles à l'axe (29, 39, 31) ou respectivement (33, 35) à partir de ses extrémités et qui sont espacées de manière égale dans la direction circonférentielle.

8. Élément de puissance selon la revendication 7, **caractérisé en ce que** les fentes associées à l'une extrémité de la douille sont décalées dans la direction circonférentielle par rapport aux fentes opposées (Fig. 5).

9. Élément de puissance selon la revendication 7 ou 8, **caractérisé en ce que** la longueur des fentes (29, 31) ou respectivement (33, 35) est environ 2/3 de la longueur totale de la douille (28a, 28b).

10. Élément de puissance selon la revendication 9, **caractérisé en ce que** les fentes associées aux extrémités de la douille sont alignées l'une par rapport à l'autre.

11. Élément de puissance selon la revendication 9, **caractérisé en ce que** la longueur des fentes (30) est environ 3/8 de la longueur totale de la douille (28).
